# FASCICULE DE BREVET EUROPEEN

(11) **EP 3 608 229 B1**
(45) Date de publication et mention de la délivrance du brevet: **14.04.2021**
(21) Numéro de dépôt: 19185632.7
(22) Date de dépôt: 11.07.2019
(51) Int. Cl.: B64D 13/06, B64D 13/08

(54) **MODULE OPTIMISE POUR COCKPIT D'AERONEF**
VERBESSERTES MODUL FÜR COCKPIT EINES LUFTFAHRZEUGS
OPTIMISED MODULE FOR AIRCRAFT COCKPIT

(30) Priorité: 07.08.2018 FR 1857365
(43) Date de publication de la demande: 12.02.2020
(73) Titulaire: AIRBUS OPERATIONS (S.A.S.), 31060 Toulouse (FR)
(72) Inventeur: GUERING, Bernard, 31060 TOULOUSE Cedex 9 (FR); SAINT-MARC, Laurent, 31060 TOULOUSE Cedex 9 (FR)
(74) Mandataire: Gicquel, Olivier Yves Gérard

(56) Documents cités:
- EP-A1- 1 323 555
- US-A1- 2005 046 164
- US-A1- 2014 209 740
- US-A1- 2016 244 171

## Description

### DOMAINE TECHNIQUE

L'invention se rapporte au domaine de l'assemblage des différents composants d'un aéronef. Elle concerne plus spécifiquement le cockpit d'un aéronef, et l'assemblage de ses différents équipements.

L'invention s'applique préférentiellement aux avions commerciaux.

### ÉTAT DE LA TECHNIQUE ANTERIEURE

Le cockpit d'un aéronef est classiquement délimité par une ossature qui forme sa partie structurale. Des équipements sont fixés sur cette ossature de cockpit, comme par exemple un tableau de bord, également dénommé « MIP » (de l'anglais « *Main Instrument Panel »*)*.*

Le cockpit est aussi équipé de nombreux composants appartenant à un système d'air de climatisation, et dont l'assemblage sur l'ossature de cockpit engendre un temps de montage élevé.

Ce temps de montage dédié à l'assemblage des composants du système d'air sur l'ossature de cockpit s'ajoute à celui requis pour le montage de tous les autres composants du cockpit, comme les systèmes, les garnitures, etc.

En outre, la durée globale de l'assemblage du cockpit est impactée par la difficulté d'accès aux points de fixation de certains composants sur l'ossature. Ces points de fixation se situent en effet parfois dans des zones denses, compliquant les interventions pour les opérateurs.

Les cadences de production des aéronefs restent ainsi perfectibles.

Il existe par conséquent un besoin d'optimisation de la conception des cockpits d'aéronef, de manière à faciliter leur assemblage.

Le document US2016/0244171 divulgue un cockpit d'aéronef comprenant un dispositif d'affichage dans le boitier duquel se trouve un ventilateur permettant de refroidir le dispositif d'affichage. Le document EP1323555 décrit un dispositif de climatisation de l'habitacle d'un véhicule automobile comprenant des conduits de sortie de l'air traité dont un débouchant vers le tableau de bord. Le document US 2014/209740 décrit un dispositif de visualisation de cockpit d'aéronef comportant un écran monté pivotant sur un support. Le dispositif comprend aussi un caisson distributeur d'air ayant des diffuseurs dans la partie basse du cockpit.

### EXPOSÉ DE L'INVENTION

Pour répondre au moins partiellement à ce besoin, l'invention a tout d'abord pour objet un module pour cockpit d'aéronef, le module comprenant un tableau de bord destiné à supporter au moins un écran, et comprenant de plus un bloc de distribution d'air de climatisation longeant ce tableau de bord et solidaire d'une face arrière de ce dernier, le bloc de distribution d'air de climatisation comprenant :
- un distributeur d'air ;
- un collecteur d'excédent d'air ;
- une pluralité de canaux de distribution d'air comportant chacun une première extrémité communiquant avec le distributeur d'air ainsi qu'une seconde extrémité communiquant avec le collecteur d'excédent d'air, chaque canal de distribution étant équipé d'une sortie d'air agencée entre ses première et seconde extrémités.

L'invention rompt ainsi avec la technique antérieure en rapportant le bloc de distribution d'air de climatisation au tableau de bord, de manière à former un même module. L'assemblage du cockpit comprenant un tel module s'en trouve simplifié, car le nombre d'éléments à installer sur l'ossature de cockpit est avantageusement réduit. De plus, le bloc de distribution d'air de climatisation longeant et étant solidaire de la face arrière du tableau de bord, ces deux composants s'auto-raidissent. Cela conduit à une masse et à un encombrement global optimisés pour le module, avec pour conséquence une plus grande facilité de montage contribuant à améliorer encore davantage les cadences de production.

L'invention prévoit de préférence au moins l'une des caractéristiques techniques optionnelles suivantes, prises isolément ou en combinaison.

La sortie d'air d'au moins l'un des canaux de distribution d'air est équipée d'une vanne de régulation de débit d'air.

La sortie d'air d'au moins l'un des canaux de distribution d'air est connectée à un raccord, ce dernier étant préférentiellement équipé d'un diffuseur d'air et/ou d'un réchauffeur d'air.

Le bloc de distribution d'air de climatisation est configuré pour assurer au moins l'une des fonctions suivantes, et préférentiellement une pluralité d'entre elles, et encore plus préférentiellement la totalité de celles-ci :
- ventilation en direction d'un ou des deux pieds du pilote ;
- ventilation en direction du tronc supérieur et/ou de la tête du pilote ;
- désembuage d'une vitre avant de pare-brise ;
- désembuage d'une ou plusieurs vitres latérales de pare-brise.

Le distributeur d'air du bloc ainsi que le collecteur d'excédent air sont adjacents à deux extrémités latérales du tableau de bord, respectivement.

Les canaux de distribution d'air sont empilés les uns sur les autre selon une direction de la hauteur du tableau de bord, et agencés entre le distributeur d'air et collecteur d'excédent air.

Chaque canal de distribution d'air présente une courbure sensiblement identique localement à une courbure du tableau de bord.

Le module comporte un capot d'isolation thermique du bloc de distribution d'air, ce dernier étant enfermé entre le tableau de bord et le capot d'isolation thermique.

Le capot d'isolation thermique porte au moins un diffuseur d'air associé à au moins l'un des canaux de distribution d'air.

Le capot d'isolation thermique porte au moins un moteur d'actionnement d'au moins une vanne de régulation de débit d'air associée à au moins l'un des canaux de distribution d'air, chaque moteur étant préférentiellement porté au niveau d'une portion supérieure du capot d'isolation thermique.

Le module comporte une bouche d'entrée d'air raccordée au distributeur d'air, ainsi qu'une bouche de sortie d'excédent d'air raccordée au collecteur d'excédent d'air.

Le tableau de bord et le bloc de distribution d'air sont réalisés d'une seule pièce.

Le module comporte au moins un écran porté par le tableau de bord, l'écran étant de préférence un écran à diodes électroluminescentes organiques.

L'invention a également pour objet un cockpit d'aéronef comprenant une ossature ainsi qu'un tel module fixé sur l'ossature de cockpit, de préférence sur une armature structurale de pare-brise.

L'invention a aussi pour objet un aéronef comprenant un tel cockpit.

Il comprend de préférence un compartiment inférieur avant situé sous un plancher de cockpit et sous un plancher de cabine passager, le compartiment inférieur avant logeant des armoires électriques agencées en arrière par rapport à une paroi arrière de cockpit, et il est configuré de sorte que l'air s'échappant du collecteur d'excédent d'air du module de cockpit soit introduit dans le compartiment inférieur avant.

Enfin, l'invention a pour objet un procédé d'assemblage d'un tel cockpit, comprenant une étape de fixation du module sur l'ossature de cockpit.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en plan de côté d'un aéronef selon l'invention ;
- la figure 2 représente une vue en perspective de la pointe avant de l'aéronef montré sur la figure précédente ;
- la figure 3 représente une vue en perspective similaire à celle de la figure 2, avec les peaux de fuselage retirées pour une meilleure lisibilité de la figure ;
- la figure 4 représente une vue en perspective similaire à celle de la figure 3, avec l'ossature de cockpit retirée pour une lisibilité encore améliorée ;
- la figure 5 représente une vue de face de celle montrée sur la figure 4 ;
- la figure 6 représente une vue en perspective d'un module selon l'invention, équipant le cockpit de la pointe avant montrée sur les figures précédentes ;
- la figure 7 représente une vue en perspective du module similaire à la précédente, selon un autre angle de vue ;
- la figure 8 est une vue de face de celles montrées sur les figures 6 et 7 ;
- la figure 9 est une vue en perspective du module montré sur la figure 7, coupé par un plan P1 de celle-ci ;
- la figure 10 est une vue en coupe du module coupé selon le plan P2 de la figure 9 ;
- la figure 11 représente une vue partielle agrandie de celle de la figure 3;
- la figure 12 représente une vue similaire à la précédente, montrant également des diffuseurs d'air ;
- la figure 13 représente une vue en perspective similaire à la précédente, selon un autre angle de vue; et
- la figure 14 représente une vue en perspective similaire à celle de la figure 3, selon un autre angle de vue.

### EXPOSÉ DÉTAILLÉ DE MODES DE RÉALISATION PRÉFÉRÉS

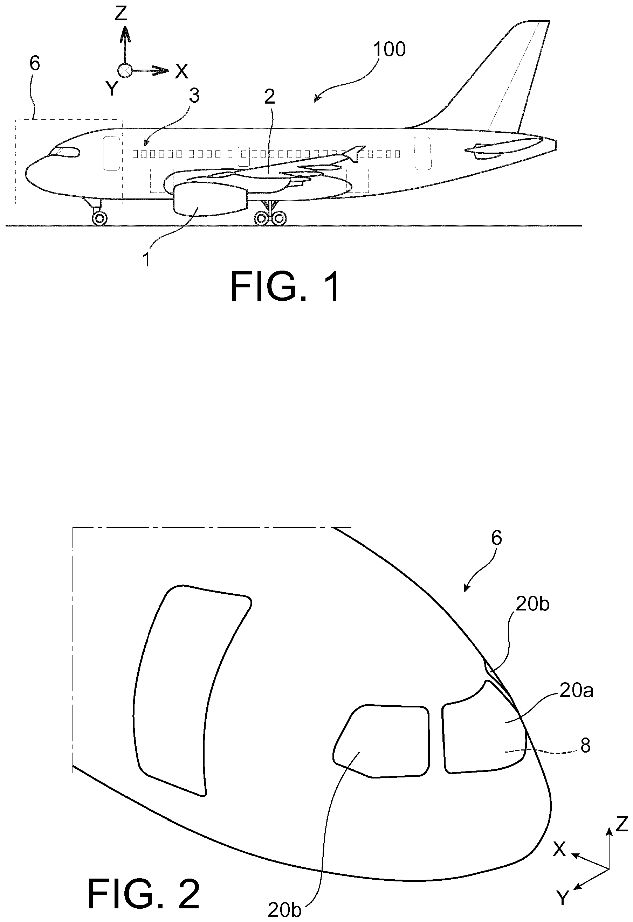

En référence à la figure 1, il est représenté un aéronef 100 du type avion commercial, comprenant deux ailes 2 (une seule visible sur la figure 1) fixées à un fuselage 3 et portant chacune une turbomachine 1 du type à double flux, tel qu'un turboréacteur.

Sur cet aéronef 100, il est prévu une pointe avant 6 qui est spécifique à la présente invention, et dont un mode de réalisation préféré va à présent être décrit en référence aux figures suivantes.

Dans toute la description qui va suivre, par convention, la direction X correspond à la direction longitudinale de l'aéronef, cette direction correspondant également à la direction longitudinale de la pointe avant 6, ainsi qu'à celle du cockpit 8 défini par cette pointe. D'autre part, la direction Y correspond à la direction latérale ou transversale de l'aéronef, cette direction correspondant également à la direction latérale de la pointe avant 6, ainsi qu'à celle du cockpit 8. Enfin, la direction Z correspond à la direction verticale ou de la hauteur, ces trois directions X, Y, Z étant orthogonales entre elles. En outre, les termes « avant » et « arrière » sont à considérer en rapport à une direction d'avancement de l'aéronef, suite à la poussée des turbomachines.

Sur les figures 2 à 5, il est représenté de manière plus détaillée la pointe avant 6 de l'aéronef, et notamment son cockpit 8 qui présente ici la particularité de disposer d'un volume plutôt réduit par rapport aux solutions conventionnelles. En particulier, il prévoit un siège pilote 10 centré au sein du cockpit selon la direction Y pour accueillir le pilote, ainsi qu'un siège copilote 12 décalé du siège pilote 10 vers l'arrière selon la direction X et vers la droite selon la direction Y. La réduction du volume du cockpit est motivée par des raisons économiques, à savoir par le souhait d'augmenter le volume de la cabine passager.

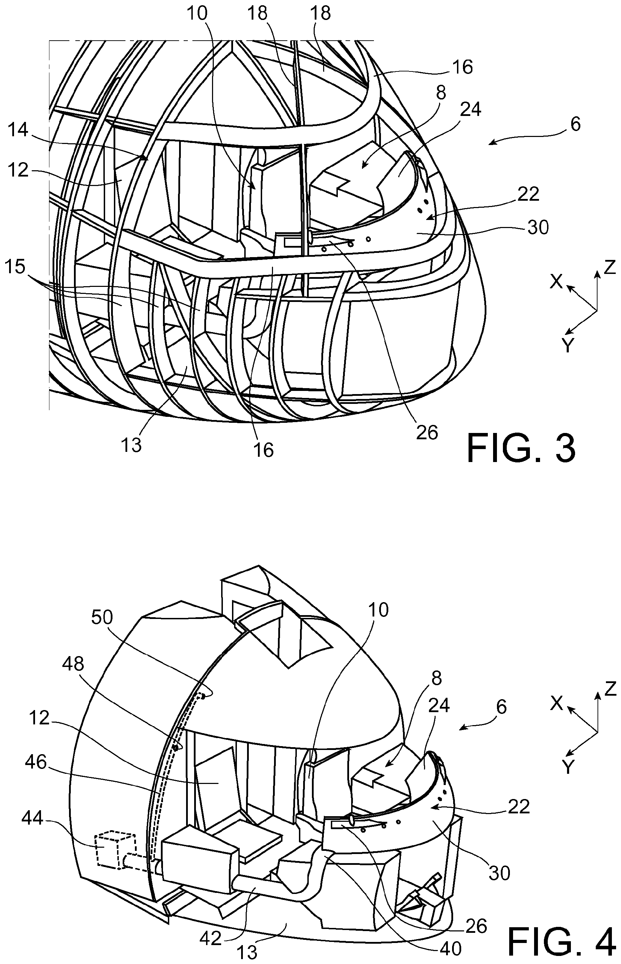

Le cockpit 8 est délimité en partie par un plancher de cockpit 13, et par une ossature 14 visible sur la figure 3, qui fait partie intégrante du fuselage de la pointe avant 6. Cette ossature 14 comprend des cadres transversaux 15, certains interrompus par une zone de pare-brise comportant une armature structurale de pare-brise. Cette armature est formée par deux cadres inférieur et supérieur 16, agencés sensiblement dans des plans XY et suivant le profil de la pointe avant en forme générale d'ogive. Elle comprend également des cadres latéraux 18 reliant les deux cadres 16, et s'étendant au-delà de ces derniers. À l'arrière, cette armature est complétée par l'un des cadres transversaux 15. Préférentiellement, l'armature structurale de pare-brise 16, 18 est configurée pour recevoir seulement trois vitres montrées sur la figure 2, à savoir une vitre avant de pare-brise 20a centrée selon la direction Y, et deux vitres latérales 20b agencées de part et d'autre de la vitre 20a selon cette même direction.

L'une des particularités de l'invention réside dans l'implantation d'un module innovant au sein du cockpit. Ce module, référencé 22 sur les figures, est prévu pour intégrer plusieurs fonctions tout en formant un même et unique ensemble monté à l'aide de moyens conventionnels sur l'ossature 14 du cockpit. Plus précisément, le module 22 est préférentiellement fixé sur le cadre inférieur 16 de l'armature structurale de pare-brise, par exemple en trois ou quatre points de fixation seulement, répartis le long de ce cadre 16. L'étape de fixation du module 22 sur l'armature structurale de pare-brise s'avère ainsi particulièrement simple à mettre en œuvre, avec pour conséquence une réduction du temps d'assemblage du cockpit, et une amélioration de cadences de production des aéronefs.

Principalement, le module 22 comprend un tableau de bord 24, un bloc de distribution d'air de climatisation 26, ainsi qu'un capot 30 d'isolation thermique du bloc 26. Il peut comprendre d'autres éléments, comme un ou plusieurs écrans destinés à être supportés en face avant sur le tableau de bord, ce/ces écrans (non représentés sur les figures 2 à 5) étant préférentiellement des écrans à diodes électroluminescentes organiques, dits écrans OLED. Ces écrans sont de faible épaisseur, et ne diffusent pas ou que très peu de chaleur. Il n'est donc pas nécessaire de prévoir une extraction d'air chaud. Leur encombrement est également réduit, tout comme leur besoin en câbles électriques, ce qui participe à la compacité du module ainsi qu'à sa capacité à intégrer d'autres éléments tout en conservant un encombrement global raisonnable.

Alternativement, le/les écrans peuvent être rapportés ultérieurement sur le tableau de bord, après la fixation du module sur l'armature structurale de pare-brise, sans sortir du cadre de l'invention.

Parmi les autres composants susceptibles d'être intégrés au module 22, il est noté par exemple des diffuseurs d'air ou des vannes de régulation de débit d'air, comme cela va être décrit ultérieurement.

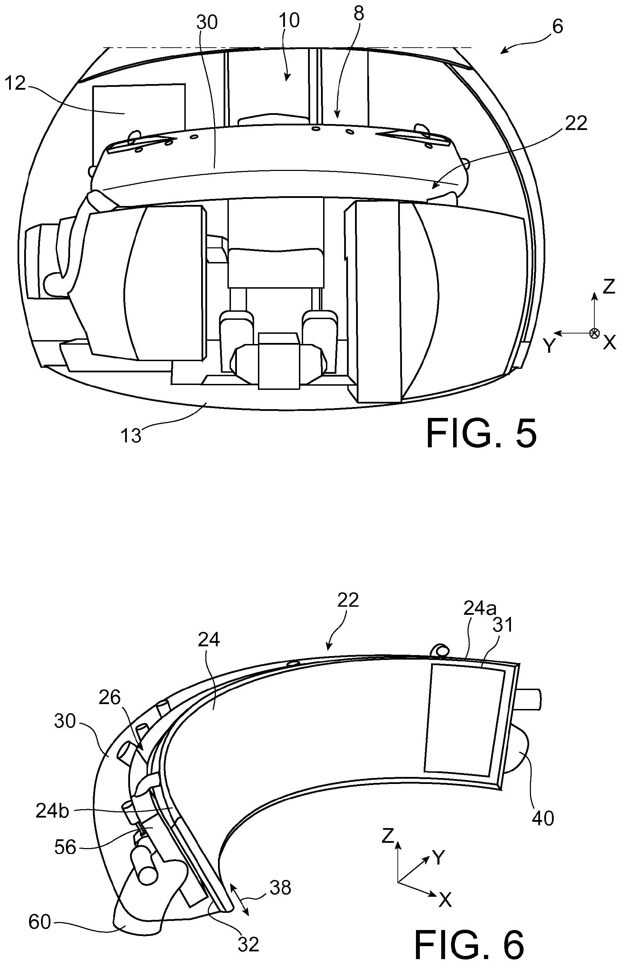

En référence à présent aux figures 6 à 10, il est montré le module 22 de manière plus détaillée. Le tableau de bord 24 et le bloc de distribution d'air 26 peuvent être réalisés séparément, et fixés l'un sur l'autre avant le montage du module dans le cockpit. Dans ce cas, le tableau de bord 24 prend de préférence la forme d'un panneau sandwich. La fixation des deux éléments 24, 26 l'un sur l'autre s'effectue par exemple à l'aide d'agrafes. Alternativement, ces deux éléments 24, 26 sont réalisés d'une seule pièce, c'est-à-dire monobloc. Par exemple, la réalisation de cette pièce unique s'effectue par injection de résine basse pression, ou encore par impression 3D. Le capot d'isolation thermique 30 est préférentiellement rapporté sur cet ensemble monobloc, ou bien réalisé d'une seule pièce avec ce dernier.

Dans tous les cas, le bloc 26 est solidaire d'une face arrière 32 du tableau de bord 24, et longe ce même tableau recevant au moins un écran OLED 31 schématisé sur la figure 6. Le tableau 24 adopte une forme générale de secteur angulaire de tronc de cône, en étant destinée à être centrée dans le cockpit selon la direction Y. De par la forme tronconique de ce tableau 24, celui-ci présente une courbure autour de la direction Z. Néanmoins, une double courbure pourrait être prévue au sein du tableau de bord 24, sans sortir du cadre de l'invention.

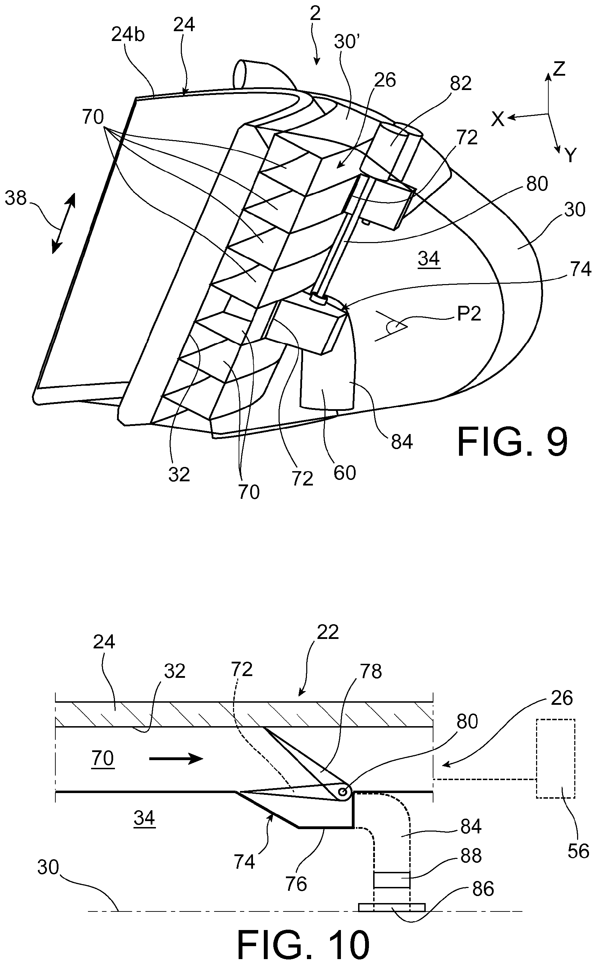

Le bloc de distribution d'air 26 présente une forme générale identique ou similaire à celle du tableau qu'il longe sur une grande partie de la longueur de ce dernier, voire sur sensiblement la même longueur. Le bloc 26, adoptant donc lui aussi une forme générale de secteur angulaire de tronc de cône, présente une section sensiblement constante et rectangulaire. Dans le cas préféré d'une réalisation monobloc, le grand côté arrière de ce rectangle est ainsi confondu avec la face arrière 32 du tableau de bord 24, comme cela est le mieux visible sur la figure 9. L'épaisseur du bloc 26 est supérieure à celle du tableau de bord 24, mais suffisamment faible pour que ce bloc puisse être enfermé dans un espace 34 agencé entre le tableau 24 et le capot d'isolation thermique 30. Cet enfermement est total ou partiel. Dans le mode de réalisation préféré décrit et représenté, seules deux extrémités latérales supérieures opposées du bloc 26 sont agencées en dehors de l'espace 34.

Le capot 30 suit également la courbure des éléments 24, 26 autour de la direction Z, et présente une section en forme générale de C ouvert vers l'arrière. Les deux extrémités du C sont ainsi raccordées respectivement sur les chants inférieur et supérieur du tableau de bord 24.

Le bloc de distribution d'air de climatisation 26 comporte tout d'abord un distributeur d'air 36, adjacent à une extrémité latérale droite 24a du tableau de bord 24. Le distributeur 36 présente une forme sensiblement parallélépipédique, s'étendant dans la direction 38 de la hauteur du tableau. Ce distributeur 36 est raccordé à une bouche d'entrée d'air 40, par exemple de section circulaire et prévue pour amener l'air frais dans le distributeur. La bouche 40 fait préférentiellement partie intégrante du module 22 avant son montage dans le cockpit, même si une intégration postérieure à ce montage est possible, sans sortir du cadre de l'invention. La bouche 40 présente une première extrémité connectée à une ouverture arrière prévue sur le distributeur 36, puis traverse l'espace 34 ainsi que le capot 30 pour déboucher sur une seconde extrémité agencée à l'extérieur du module. Cette seconde extrémité de la bouche d'entrée d'air 40 est connectée à un conduit d'amenée d'air 42 visible sur la figure 4, lui-même alimenté en air de manière classique par un équipement 44 connu en soi. Ce conduit 42 alimente par ailleurs en air un autre conduit 46 s'étendant vers le haut le long de l'ossature du cockpit 8. Cet autre conduit porte des bouches de sortie ou des diffuseurs 48, 50, destinées à diriger de l'air de climatisation en direction du siège 12 pour rafraîchir le copilote, et à introduire de l'air depuis une zone supérieure du cockpit afin de générer une climatisation dite « d'ambiance ».

Le raccordement du conduit d'amenée d'air 42, sur la seconde extrémité de la bouche d'entrée d'air 40 du module 22, s'effectue préférentiellement après le montage de ce dernier dans le cockpit. En d'autres termes, ce conduit d'amenée d'air 42 n'est de préférence pas intégré au module 22, mais raccordé à ce dernier dans le cockpit.

De manière analogue, le bloc de distribution d'air de climatisation 26 comporte également un collecteur d'excédent d'air 56, adjacent à une extrémité latérale gauche 24b du tableau de bord 24. Le collecteur 56 présente une forme sensiblement parallélépipédique, s'étendant dans la direction 38 de la hauteur du tableau. Ce collecteur 56 est raccordé à une bouche de sortie d'excédent d'air 60, par exemple de section circulaire et prévue pour extraire l'air frais non-utilisé en dehors du collecteur 56.

La bouche 60 fait préférentiellement partie intégrante du module 22 avant son montage dans le cockpit, même si une intégration postérieure à ce montage est possible, sans sortir du cadre de l'invention. La bouche 60 présente une première extrémité connectée à une ouverture arrière prévue sur le collecteur 56, puis traverse l'espace 34 ainsi que le capot 30 pour déboucher sur une seconde extrémité agencée à l'extérieur du module.

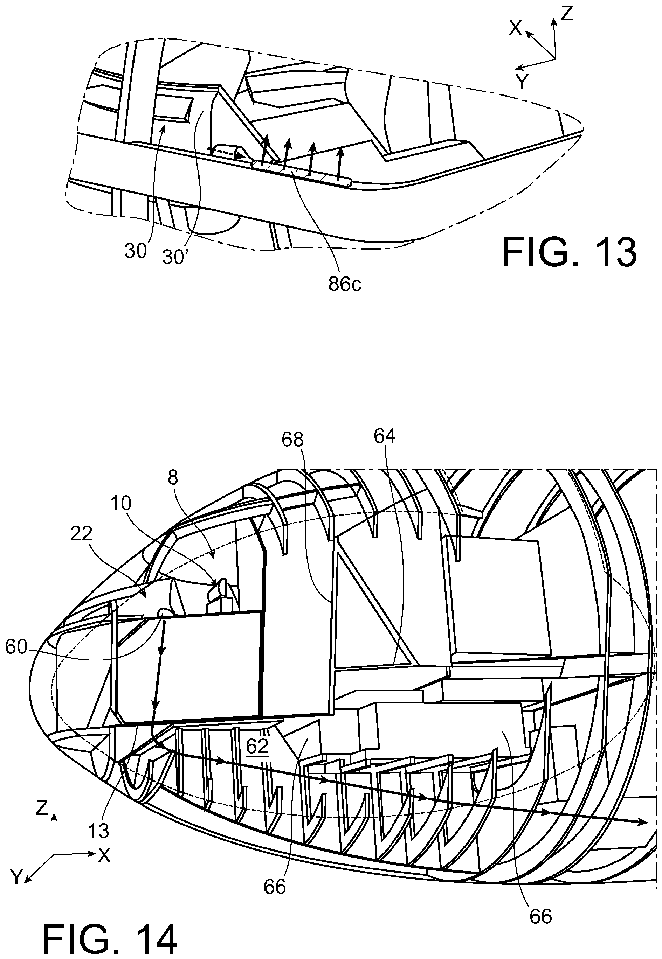

Cette seconde extrémité de la bouche d'excédent d'air 60 est soit libre, soit raccordé à un conduit d'évacuation (non représenté). Dans les deux cas, il est préférentiellement fait en sorte que cet excédent d'air soit introduit dans un compartiment inférieur avant de la pointe avant, ce compartiment étant référencé 62 sur la figure 14. Il s'agit d'un compartiment 62 situé sous le plancher de cockpit 13 et sous un plancher de cabine passager 64, qui loge des armoires électriques 66 placées en arrière par rapport à une paroi arrière de cockpit 68. À titre indicatif, il est noté que dans certaines solutions antérieures, ce compartiment 62 présente un volume plus grand permettant une implantation des armoires 66 et d'autres équipements plus en avant au sein de ce compartiment. Le rétrécissement de cette pointe avant conduit donc à décaler certains équipements vers l'arrière dans le compartiment 62, ou à envisager leur déplacement dans d'autres parties de l'aéronef. Par conséquent, en intégrant le bloc 26 dans le module de cockpit 22, l'invention apporte une solution satisfaisante à la problématique de logement des systèmes de distribution d'air de climatisation de l'art antérieur, dont une grande partie des composants était agencée dans le compartiment 62 de volume supérieur, sous le plancher de cockpit.

De retour aux figures 6 à 10, le bloc de distribution d'air de climatisation 26 comporte une pluralité de canaux de distribution d'air 70, prévus dans un nombre compris par exemple entre quatre et dix. Ces canaux 70, de section sensiblement carrée ou rectangulaire, sont empilés les uns sur les autres selon la direction 38 de la hauteur du tableau de bord 24, dont ils longent la face arrière 32. D'ailleurs, chaque canal 70 s'inscrit dans un plan XY en présentant une courbure sensiblement identique, localement, à la courbure du tableau de bord 24 autour de la direction Z. Cet agencement permet le raidissement du tableau 24 par les canaux 70, le distributeur 36 et le collecteur 56, de même que le bloc 26 se trouve lui-même renforcé par le tableau adjacent 24. Cela conduit à une masse et à un encombrement global optimisés pour le module 22, avec pour conséquence une plus grande facilité de montage contribuant à améliorer encore davantage les cadences de production.

Dans le cas préféré d'une réalisation monobloc, le côté arrière de chaque canal de distribution d'air 70 est confondu avec la face arrière 32 du tableau de bord 24, comme cela est le mieux visible sur la figure 9.

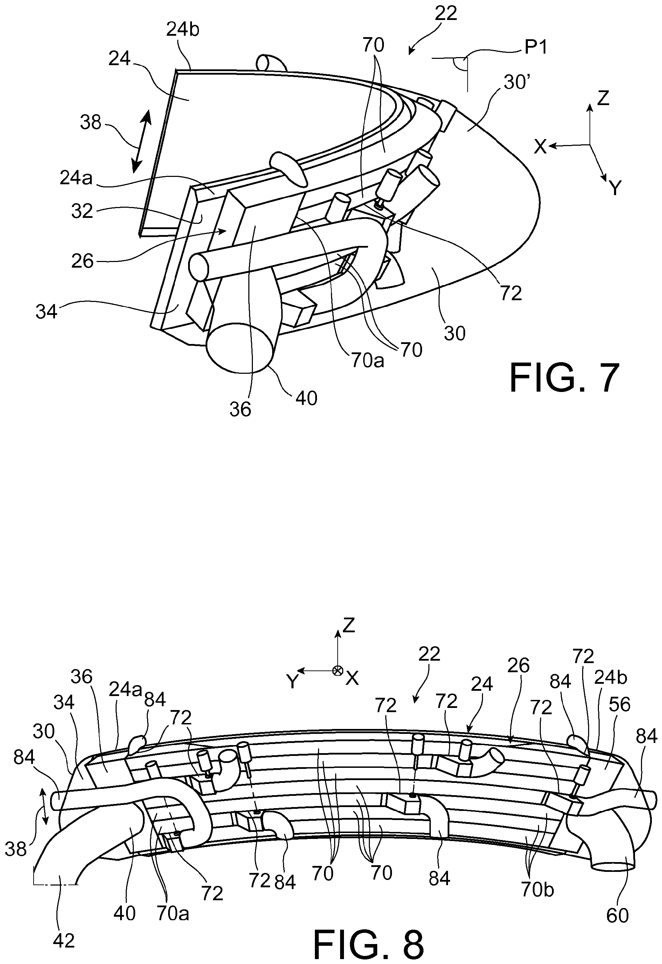

Les canaux 70 s'étendent en longueur entre le distributeur 34 et le collecteur 56, en comportant chacun une première extrémité 70a communiquant avec le distributeur d'air 36, ainsi qu'une seconde extrémité 70b communiquant avec le collecteur d'excédent d'air 56. De plus, chaque canal 70 est équipé d'une sortie d'air 72 agencée entre ses première et seconde extrémités 70a, 70b. Comme cela est parfaitement visible sur la figure 8, les sorties 72 des différents canaux 70 sont espacées les unes des autres dans la direction de la longueur de bloc 26 allant de son distributeur 36 vers son collecteur 56.

L'une des sorties 72 va à présent être décrite plus spécifiquement en référence aux figures 9 et 10. Cette sortie 72 prend par exemple la forme d'une simple ouverture à travers la paroi avant du canal 70 concerné. Elle peut être équipée d'une vanne de régulation de débit d'air 74, comportant une excroissance 76 vers l'avant faisant partie intégrante du bloc 26. La vanne 74 comprend également un déflecteur 78 piloté en rotation par une tige de commande 80, elle-même commandée par un moteur 82. En fonction de la position angulaire du déflecteur 78 (deux positions schématisées sur la figure 10), le débit d'air s'échappant par la sortie 72 varie. Dans une position intermédiaire du déflecteur 78 (non représentée), une partie du débit d'air circulant en amont dans le canal 70 est dirigée vers la sortie 72, tandis que l'autre partie du débit poursuit son chemin dans le canal 70 jusqu'au collecteur d'excédent d'air 56.

La sortie 72 est aussi de préférence connectée à un raccord 84, souple ou rigide, dont l'une des extrémités est préférentiellement raccordée sur l'excroissance 76 de la vanne 74 équipant la sortie, et dont l'autre extrémité peut être équipée d'un diffuseur d'air 86 et/ou d'un réchauffeur d'air 88 pour ajuster la température à la consigne souhaitée. Pour certains cas au moins, le diffuseur 86 équipant l'extrémité du raccord 84 peut être porté par le capot 30, comme cela a été schématisé dans la figure 10.

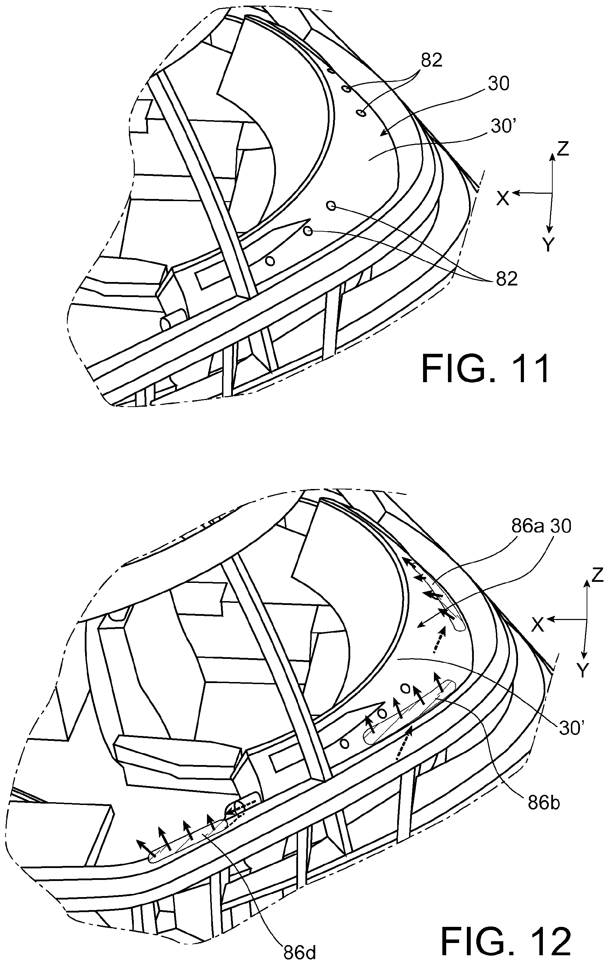

Ainsi, les vannes 74, les diffuseurs 86 ainsi que les réchauffeurs 88 sont intégrés au module 22 avant son montage dans le cockpit. Pour faciliter la maintenance des moteurs 82 des vannes 74, ces moteurs sont également portés par le capot 30, au niveau d'une portion supérieure 30' de ce capot comme cela est visible sur la figure 11. Ils sont de ce fait aisément accessibles aux opérateurs, et les démontages/montages de ces moteurs 82 peuvent par exemple être effectués par un simple mouvement de quart de tour, grâce à une liaison à baïonnette ou équivalente entre chaque moteur 82 déporté vers le haut, et la portion supérieure 30' du capot.

En référence plus spécifiquement, il va être décrit un exemple de réalisation avec sept canaux 70 empilés, chacun présentant une fonction différente. Ces fonctions vont à présent être décrites, en partant du canal le plus haut vers le canal le plus bas dans l'empilement.

Le premier canal 70 comporte deux sorties 72, respectivement agencées aux extrémités de celui-ci. Ces deux sorties 72 sont chacune équipée d'un raccord 84 orientant l'air en direction du tronc supérieur et/ou de la tête du pilote. Elles peuvent être équipées d'un réchauffeur 88 et/ou d'un diffuseur, comme cela a été montré sur la figure 10. Il est noté que pour ce premier canal, les raccords 84 sont agencés entièrement à l'extérieur de l'espace 34, puisque leurs sorties associées 82 ne sont préférentiellement par recouvertes par le capot d'isolation thermique 30.

Le second canal 70 comporte une sortie 82 équipée d'un raccord 84 à l'extrémité duquel se trouve un diffuseur 86a, représenté sur la figure 12. Ce diffuseur 86a, de préférence intégré au module 22 avant son montage dans le cockpit, est situé sur la portion supérieure 30' du capot 30. L'air qui s'extrait de ce diffuseur 86a est dédié au désembuage de la partie gauche de la vitre avant de pare-brise.

De manière analogue, le troisième canal 70 comporte une sortie 82 équipée d'un raccord 84 à l'extrémité duquel se trouve un diffuseur 86b, représenté sur la figure 12. Ce diffuseur 86b, de préférence aussi intégré au module 22 avant son montage dans le cockpit, est situé sur la portion supérieure 30' du capot 30. L'air qui s'extrait de ce diffuseur 86b est dédié au désembuage de la partie droite de la vitre avant de pare-brise.

Le quatrième canal 70 comporte une sortie 82 équipée d'un raccord 84 traversant une extrémité latérale du module 22, et à l'extrémité duquel se trouve un diffuseur 86c, représenté sur la figure 13. Ce diffuseur 86c, de préférence rapporté après le montage du module 22 dans le cockpit, est situé à gauche de ce module, en étant fixé sur l'ossature de cockpit. L'air qui s'extrait de ce diffuseur 86c est dédié au désembuage de la vitre latérale gauche de pare-brise.

Le cinquième canal 70 comporte la sortie 72 déjà décrite en référence aux figures 9 et 10. L'air qui s'extrait du diffuseur 86 est dédié à la ventilation en direction du pied gauche du pilote. De manière analogue, l'air qui s'extrait du diffuseur associé à la sortie 72 du sixième canal 70 est dédié à la ventilation en direction du pied droit du pilote.

Enfin, le septième et dernier canal 70 comporte une sortie 82 équipée d'un raccord 84 traversant l'autre extrémité latérale du module 22. Un diffuseur 86d, représenté sur la figure 12, se trouve à l'extrémité de ce raccord. Ce diffuseur 86d, de préférence rapporté après le montage du module 22 dans le cockpit, est situé à droite de ce module, en étant fixé sur l'ossature de cockpit. L'air qui s'extrait de ce diffuseur 86d est dédié au désembuage de la vitre latérale droite de pare-brise.

Bien entendu, diverses modifications peuvent être apportées par l'homme du métier à l'invention qui vient d'être décrite, uniquement à titre d'exemples non limitatifs, et dont la portée est définie par les revendications jointes en annexe.

## Revendications

1. Module (22) pour cockpit (8) d'aéronef, le module comprenant un tableau de bord (24) destiné à supporter au moins un écran (31) et comprenant de plus un bloc de distribution d'air de climatisation (26) longeant ce tableau de bord et solidaire d'une face arrière (32) de ce dernier, le bloc de distribution d'air de climatisation (26) comprenant :
- un distributeur d'air (36) ;
- un collecteur d'excédent d'air (56) ;
- une pluralité de canaux de distribution d'air (70) comportant chacun une première extrémité (70a) communiquant avec le distributeur d'air (36) ainsi qu'une seconde extrémité (70b) communiquant avec le collecteur d'excédent d'air (56), chaque canal de distribution (70) étant équipé d'une sortie d'air (72) agencée entre ses première et seconde extrémités (70a, 70b).

2. Module selon la revendication 1, **caractérisé en ce que** la sortie d'air (72) d'au moins l'un des canaux de distribution d'air (70) est équipée d'une vanne de régulation de débit d'air (74).

3. Module selon la revendication 1 ou la revendication 2, **caractérisé en ce que** la sortie d'air (72) d'au moins l'un des canaux de distribution d'air (70) est connectée à un raccord (84), ce dernier étant préférentiellement équipé d'un diffuseur d'air (86) et/ou d'un réchauffeur d'air (88).

4. Module selon l'une quelconque des revendications précédentes, **caractérisé en ce que** le bloc de distribution d'air de climatisation (26) est configuré pour assurer au moins l'une des fonctions suivantes, et préférentiellement une pluralité d'entre elles :
- ventilation en direction d'un ou des deux pieds du pilote ;
- ventilation en direction du tronc supérieur et/ou de la tête du pilote ;
- désembuage d'une vitre avant (20a) de pare-brise ;
- désembuage d'une ou plusieurs vitres latérales (20b) de pare-brise.

5. Module selon l'une quelconque des revendications précédentes, **caractérisé en ce que** le distributeur d'air (36) du bloc (26) ainsi que le collecteur d'excédent air (56) sont adjacents à deux extrémités latérales (24a, 24b) du tableau de bord (24).

6. Module selon l'une quelconque des revendications précédentes, **caractérisé en ce que** les canaux de distribution d'air (70) sont empilés les uns sur les autres selon une direction (38) de la hauteur du tableau de bord, et agencés entre le distributeur d'air (36) et collecteur d'excédent air (56).

7. Module selon l'une quelconque des revendications précédentes, **caractérisé en ce que** chaque canal de distribution d'air (70) présente une courbure sensiblement identique localement à une courbure du tableau de bord (24).

8. Module selon l'une quelconque des revendications précédentes, **caractérisé en ce qu'**il comporte un capot (30) d'isolation thermique du bloc de distribution d'air (26), ce dernier étant enfermé entre le tableau de bord (24) et le capot d'isolation thermique (30).

9. Module selon la revendication 8 combinée à la revendication 3, **caractérisé en ce que** le capot d'isolation thermique (30) porte au moins un diffuseur d'air (86) associé à au moins l'un des canaux de distribution d'air (70).

10. Module selon la revendication 8 ou la revendication 9, combinée à la revendication 2, **caractérisé en ce que** le capot d'isolation thermique (30) porte au moins un moteur (82) d'actionnement d'au moins une vanne de régulation de débit d'air (74) associée à au moins l'un des canaux de distribution d'air (70), chaque moteur étant préférentiellement porté au niveau d'une portion supérieure (30') du capot d'isolation thermique (30).

11. Module selon l'une quelconque des revendications précédentes, **caractérisé en ce qu'**il comporte une bouche d'entrée d'air (40) raccordée au distributeur d'air, ainsi qu'une bouche de sortie d'excédent d'air (60) raccordée au collecteur d'excédent d'air (56).

12. Module selon l'une quelconque des revendications précédentes, **caractérisé en ce que** le tableau de bord (24) et le bloc de distribution d'air (26) sont réalisés d'une seule pièce.

13. Cockpit (8) d'aéronef comprenant une ossature (14) ainsi qu'un module (22) selon l'une quelconque des revendications précédentes, fixé sur l'ossature de cockpit, de préférence sur une armature structurale de pare-brise (15, 16, 18).

14. Aéronef (100) comprenant un cockpit (8) selon la revendication 13.

15. Aéronef selon la revendication 14, **caractérisé en ce qu'**il comprend un compartiment inférieur avant (62) situé sous un plancher de cockpit (13) et sous un plancher de cabine passager (64), le compartiment inférieur avant (62) logeant des armoires électriques (66) agencées en arrière par rapport à une paroi arrière de cockpit (68), et **en ce qu'**il est configuré de sorte que l'air s'échappant du collecteur d'excédent d'air (56) du module de cockpit (22) soit introduit dans le compartiment inférieur avant (62).

16. Procédé d'assemblage d'un cockpit (8) selon la revendication 13, comprenant une étape de fixation du module (22) sur l'ossature de cockpit (14).

## Patentansprüche

1. Modul (22) für ein Luftfahrzeugcockpit (8), wobei das Modul ein Instrumentenbrett (24) umfasst, das dazu bestimmt ist, wenigstens einen Bildschirm (31) zu tragen und zudem einen Klimatisierungs-Luftverteilungsblock (26) umfasst, der entlang dieses Instrumentenbretts verläuft und mit einer Rückseite (32) desselben fest verbunden ist, der Klimatisierungs-Luftverteilungsblock (26) umfassend:
- einen Luftverteiler (36);
- einen Luftüberschusssammler (56);
- eine Mehrzahl von Luftverteilungskanälen (70), die jeweils ein erstes Ende (70a), das mit dem Luftverteiler (36) kommuniziert, sowie ein zweites Ende (70b), das mit dem Luftüberschusssammler (56) kommuniziert, aufweisen, wobei jeder Verteilungskanal (70) mit einem Luftauslass (72) ausgerüstet ist, der zwischen seinem ersten und zweiten Ende (70a, 70b) angeordnet ist.

2. Modul nach Anspruch 1, **dadurch gekennzeichnet, dass** der Luftauslass (72) wenigstens eines der Luftverteilungskanäle (70) mit einem Luftdurchsatzregelventil (74) ausgerüstet ist.

3. Modul nach Anspruch 1 oder 2, **dadurch gekennzeichnet, dass** der Luftauslass (72) wenigstens eines der Luftverteilungskanäle (70) mit einem Anschlussstück (84) verbunden ist, wobei dieses vorzugsweise mit einem Luftdiffusor (86) und/oder einem Luftheizgerät (88) ausgerüstet ist.

4. Modul nach einem der vorhergehenden Ansprüche, **dadurch gekennzeichnet, dass** der Klimatisierungs-Luftverteilungsblock (26) dazu ausgebildet ist, wenigstens eine der folgenden Funktionen sicherzustellen, und vorzugsweise eine Mehrzahl von ihnen:
- Belüftung in Richtung eines oder der Füße des Piloten;
- Belüftung in Richtung des oberen Rumpfes und/oder des Kopfes des Piloten;
- Heizung einer vorderen Scheibe (20a) der Windschutzscheibe;
- Heizung einer oder mehrerer Seitenscheiben (20b) der Windschutzscheibe.

5. Modul nach einem der vorhergehenden Ansprüche, **dadurch gekennzeichnet, dass** der Luftverteiler (36) des Blocks (26) sowie der Luftüberschusssammler (56) an zwei seitliche Enden (24a, 24b) des Instrumentenbretts (24) angrenzen.

6. Modul nach einem der vorhergehenden Ansprüche, **dadurch gekennzeichnet, dass** die Luftverteilungskanäle (70) in einer Richtung (38) der Höhe des Instrumentenbretts übereinander gestapelt und zwischen dem Luftverteiler (36) und dem Luftüberschusssammler (56) angeordnet sind.

7. Modul nach einem der vorhergehenden Ansprüche, **dadurch gekennzeichnet, dass** jeder Luftverteilungskanal (70) eine Krümmung aufweist, die lokal im Wesentlichen identisch zu einer Krümmung des Instrumentenbretts (24) ist.

8. Modul nach einem der vorhergehenden Ansprüche, **dadurch gekennzeichnet, dass** es eine Wärmeisolierungsabdeckung (30) des Luftverteilungsblocks (26) aufweist, wobei letzterer zwischen dem Instrumentenbrett (24) und der Wärmeisolierungsabdeckung (30) eingeschlossen ist.

9. Modul nach Anspruch 8 in Kombination mit Anspruch 3, **dadurch gekennzeichnet, dass** die Wärmeisolierungsabdeckung (30) wenigstens einen Luftdiffusor (86) trägt, der wenigstens einem der Luftverteilungskanäle (70) zugeordnet ist.

10. Modul nach Anspruch 8 oder 9 in Kombination mit Anspruch 2, **dadurch gekennzeichnet, dass** die Wärmeisolierungsabdeckung (30) wenigstens einen Motor (82) zur Betätigung wenigstens eines Luftdurchsatzregelventils (74) trägt, das wenigstens einem der Luftverteilungskanäle (70) zugeordnet ist, wobei jeder Motor vorzugsweise an einem oberen Abschnitt (30') der Wärmeisolierungsabdeckung (30) getragen wird.

11. Modul nach einem der vorhergehenden Ansprüche, **dadurch gekennzeichnet, dass** er einen Lufteinlassmund (40), der an den Luftverteiler angeschlossen ist, sowie einen Luftüberschuss-Auslassmund (60), der an den Luftüberschusssammler (56) angeschlossen ist, aufweist.

12. Modul nach einem der vorhergehenden Ansprüche, **dadurch gekennzeichnet, dass** das Instrumentenbrett (24) und der Luftverteilungsblock (26) einstückig ausgebildet sind.

13. Luftfahrzeugcockpit (8) umfassend ein Gerüst (14) sowie ein Modul (22) nach einem der vorhergehenden Ansprüche, das an dem Cockpitgerüst, vorzugsweise an einer Windschutzscheiben-Strukturverstärkung (15, 16, 18) befestigt ist.

14. Luftfahrzeug (100) umfassend ein Cockpit (8) nach Anspruch 13.

15. Luftfahrzeug nach Anspruch 14, **dadurch gekennzeichnet, dass** es einen vorderen unteren Raum (62) umfasst, der sich unter einem Cockpitboden (13) und unter einem Passagierkabinenboden (64) befindet, wobei der vordere untere Raum (62) Schaltschränke (66) beherbergt, die bezogen auf eine Cockpitrückwand (68) hinten angeordnet sind, und dadurch, dass es so ausgebildet ist, dass die Luft, die aus dem Luftüberschusssammler (56) des Cockpitmoduls (22) entweicht, in den vorderen unteren Raum (62) eingeleitet wird.

16. Verfahren zum Zusammenbau eines Cockpits (8) nach Anspruch 13, umfassend einen Schritt des Befestigens des Moduls (22) am Cockpitgerüst (14).

## Claims

1. Module (22) for aircraft cockpit (8), the module comprising an instrument panel (24) that is intended to support at least one screen (31) and further comprising an air conditioning air distribution unit (26) running along this instrument panel and secured to a rear face (32) thereof, the air conditioning distribution unit (26) comprising:
- an air distributor (36);
- a manifold for excess air (56);
- a plurality of air distribution ducts (70) each comprising a first end (70a) that communicates with the air distributor (36) and a second end (70b) that communicates with the excess air manifold (56), each distribution duct (70) being equipped with an air outlet (72) that is arranged between its first and second ends (70a, 70b).

2. Module according to Claim 1, **characterized in that** the air outlet (72) of at least one of the air distribution ducts (70) is equipped with an air flow rate control valve (74).

3. Module according to Claim 1 or 2, **characterized in that** the air outlet (72) of at least one of the air distribution ducts (70) is connected to a connector (84), this connector being preferably equipped with an air diffuser (86) and/or an air heater (88).

4. Module according to any one of the preceding claims, **characterized in that** the air-conditioning air distribution unit (26) is configured to perform at least one of the following functions, and preferably a plurality of the following functions:
- ventilation towards one or both feet of the pilot;
- ventilation towards the upper torso and/or the head of the pilot;
- demisting of a windscreen front pane (20a);
- demisting of one or more windscreen side panes (20b).

5. Module according to any one of the preceding claims, **characterized in that** the air distributor (36) of the unit (26) and the excess air manifold (56) are adjacent to two lateral ends (24a, 24b) of the instrument panel (24).

6. Module according to any one of the preceding claims, **characterized in that** the air distribution ducts (70) are stacked one above the other in a height direction (38) of the instrument panel, and arranged between the air distributor (36) and the excess air manifold (56) .

7. Module according to any one of the preceding claims, **characterized in that** each air distribution duct (70) has a curvature that is locally essentially identical to a curvature of the instrument panel (24).

8. Module according to any one of the preceding claims, **characterized in that** it comprises a cowl (30) for thermal insulation of the air distribution unit (26), the latter being enclosed between the instrument panel (24) and the thermal insulation cowl (30).

9. Module according to Claim 8 in combination with Claim 3, **characterized in that** the thermal insulation cowl (30) bears at least one air diffuser (86) associated with at least one of the air distribution ducts (70).

10. Module according to Claim 8 or Claim 9, in combination with Claim 2, **characterized in that** the thermal insulation cowl (30) bears at least one motor (82) for actuating at least one air flow rate control valve (74) associated with at least one of the air distribution ducts (70), each motor being preferably borne on an upper portion (30') of the thermal insulation cowl (30).

11. Module according to any one of the preceding claims, **characterized in that** it comprises an air intake mouth (40) connected to the air distributor, and an excess air outlet mouth (60) connected to the excess air manifold (56).

12. Module according to any one of the preceding claims, **characterized in that** the instrument panel (24) and the air distribution unit (26) are made in one piece.

13. Aircraft cockpit (8), comprising a skeleton (14) and a module (22) according to any one of the preceding claims, this being secured to the cockpit skeleton, preferably to a structural windscreen frame (15, 16, 18) .

14. Aircraft (100) comprising a cockpit (8) according to Claim 13.

15. Aircraft according to Claim 14, **characterized in that** it comprises a lower front compartment (62) located beneath a cockpit floor (13) and below a passenger cabin floor (64), the lower front compartment (62) housing the electrical cabinets (66) that are arranged behind a rear cockpit wall (68), and **in that** it is configured in such a way that the air leaving the excess air manifold (56) of the cockpit module (22) is directed into the lower front compartment (62) .

16. Method for assembling a cockpit (8) according to Claim 13, comprising a step of securing the module (22) to the cockpit skeleton (14).
